Europäisches Patentamt

**European Patent Office**

**Office européen des brevets**

(19)

(11) Publication number: **0 063 651**
A1

(12) # EUROPEAN PATENT APPLICATION

(21) Application number: **81200454.7**

(22) Date of filing: **24.04.81**

(51) Int. Cl.³: **B 63 C 13/00**, B 66 F 9/065,
B 60 P 3/10

(43) Date of publication of application: **03.11.82**
**Bulletin 82/44**

(84) Designated Contracting States: **AT BE CH DE FR GB IT**
**LI LU NL SE**

(71) Applicant: **van den Broek, Frederik Hendricus, 28 Willem**
**Klooslaan, NL-2182 VM Hillegom (NL)**

(72) Inventor: **van den Broek, Frederik Hendricus, 28 Willem**
**Klooslaan, NL-2182 VM Hillegom (NL)**

(74) Representative: **Timmers, Cornelis Herman Johannes et**
**al, EXTERPATENT 3 & 4 Willem Witsenplein, NL-2596 BK**
**THE HAGUE (NL)**

(54) **A conveyable boat cradle.**

(57) A conveyable boat cradle comprises a polygonal
supporting frame (1a) and a conveying frame (1b) to be
located around said supporting frame (1a), said conveying
frame (1b) comprising roller members (23) and lifting means
acting in a vertical direction between said conveying frame
on the one hand and said supporting frame on the other
hand.

- 1 -

## A conveyable boat cradle.

The invention relates to a conveyable boat cradle with a polygonal supporting frame comprising means for supporting the hull.

Boat cradles of the abovedescribed type are generally known and are, for instance, disclosed in Netherlands Patent Application No. 79 03417, as filed on May 1, 1979 in the name of Applicant. When such known boat cradles are loaded, so when a boat has been placed upon them, they are no longer conveyable, which implies that the respective boat has to be conveyed towards the cradle and be placed thereupon in a known manner by means of a mobile crane or a mobile boat lift.

Said conveyance of the boat towards the cradle is for the greater part the cause of the relatively high costs of a winter storage of boats ashore. Both a mobile boat lift and a mobile crane demand very high investments whereas they are only used intensively in the late and early season, to wit on bringing a boat ashore and on relaunching the same. Both devices are only difficultly manoeuvrable so that bringing boats ashore and relaunching them is rather time-consuming and demands the presence of at least three persons. In order to furthermore optimally use the space available for winter storage of boats, filling said space with boats will take place in the late season starting from one location, for instance a corner of the field which is available, whereas in the early season said boats have to be relaunched in a reverse sequence; this has the great disadvantage that the person whose boat has firstly been put ashore and placed in the winter storage space, is the last one to have his boat relaunched.

The present invention aims to provide a cheap, structural uncomplicated conveyable boat cradle, which offers the possibility of accomodating the boats in the winter storage space in a quicker and cheaper manner; obviously said cradle can also be used when a boat has to be overhauled or repaired, for which purpose it must be brought ashore.

The boat cradle in accordance with the invention is for that aim characterized by a conveying frame to be located around said supporting frame and comprising roller means resting upon the bottom and lifting means acting in a vertical direction between said conveying frame on the one hand and said supporting frame on the other hand.

Bringing ashore and launching of boats can now be accomplished by using an uncomplicated stationary crane upon a simple concrete base; the boat cradle is brought within reach of said crane, whereupon the boat is placed upon the cradle. This does not require intricate or difficult manoeuvring with the crane and/or the boat and does not take much time. By extending the lifting means the supporting frame is detached from the bottom whereafter said conveying frame can be towed away with the supporting frame either by manpower or with the aid of a simple tractor. When the assembly consisting of said conveying frame and supporting frame has arrived at the desired location, the lifting means are retracted so that the supporting frame with the boat comes to rest upon the bottom, whereupon the conveying frame can be removed for conveying another supporting frame.

A simple and cheap embodiment according to the invention is obtained when the supporting frame is substantially trapezoidal while the conveying frame has a substantial U-shape and possesses diverging longitudinal legs being adapted to the dimensions of the supporting frame. In this embodiment an accurate adaptation of the dimensions of the conveying frame to those of the supporting frame is not essential, as the longitudinal legs of the conveying frame, the supporting frame respectively, will automatically fit into each other when the conveying frame is initially placed about the supporting frame from the smaller side of the latter.

In a favourable embodiment of the invention the conveying frame comprises at least along two sides facing each other, a L-shape profile beam open to the underside and outside which profile beam is provided with coupling members interacting with the supporting frame, with within said L-profile beam a U-shape profile beam, open to the underside and accomodating rollers, the lifting members being supported in the U-profile beam and acting upon a transverse leg of the L-beam thereabove.

The two longitudinal legs of the supporting frame are for that aim preferably provided with an outwardly projecting supporting face, cooperating with a lifting surface being situated thereabove and being disposed on the inside of the L-beam, which lifting surface projects towards the centre of the conveying frame.

The lifting members preferably consist of pneumatically or hydraulically operating cylinders, which, having compact dimensions, still permit a substantial lifting capacity and which are fed with pressure fluid by means of a simple compressor, hydraulic pump respectively.

In a preferred embodiment of the present invention the supporting face is constituted by a leg of a longitudinal U-profile beam open to the outside, while the lifting surface is formed by the upper face of a profile beam section being provided on the inner side of the conveying frame.

The displacement of the conveying frame is facilitated when the transverse beam of said frame carries at least one wheel which is rotatable about a vertical axle.

Accomodating a boat can be effected simply with an easy adaption of the configuration of the supporting parts to the shape of the respective boat, when the uprights of the supporting frame are formed by telescoping tube sections, the lower end of the outermost one being accomodated in a guide member which is slideably enclosed in a frame beam being provided with a longitudinal slot. As soon as the uprights of the supporting frame are loaded by the weight of the boat, both the telescoping tube sections and the guide members will cant slightly, thus causing the various components to be automatically locked against any further displacement. Furthermore the two transverse sides are preferably interconnected by means of a longitudinal centre beam provided with a longitudinal slot and enclosing at least one guide member. Said longitudinal centre beam may comprise still further uprights with supporting heads, by means of which the keel and the lower part of the hull can be supported.

The uprights can be easily detached from the guide members and the-now flat-supporting frames can be stacked so that they do not occupy much space.

The invention will be illustrated, by way of example only, with the aid of the accompanying drawings, wherein:

Figure 1 is a perspective view of a supporting frame and of a matching conveying frame according to the invention;

Figure 2 is a perspective view of a supporting and a conveying frame with a boat disposed thereupon;

Figure 3 is half view, half cross-section of profile beams used for the construction of the conveying frame, said figure likewise showing in which manner the guide members are guided in the supporting frame;

Figure 4 is a detail showing the manner in which the front wheels are supported in the conveying frame;

Figure 5 is a side view of said front wheel unit.

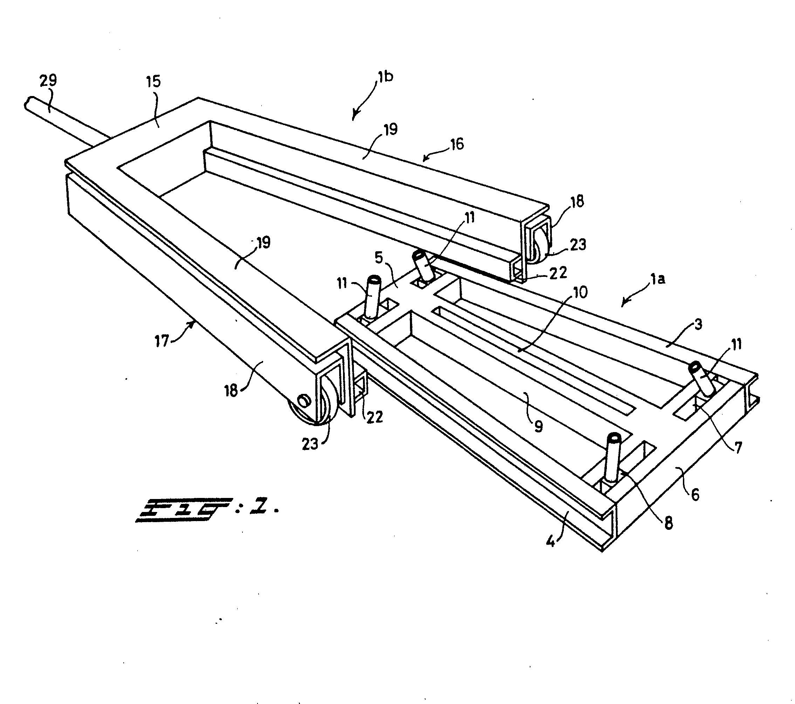

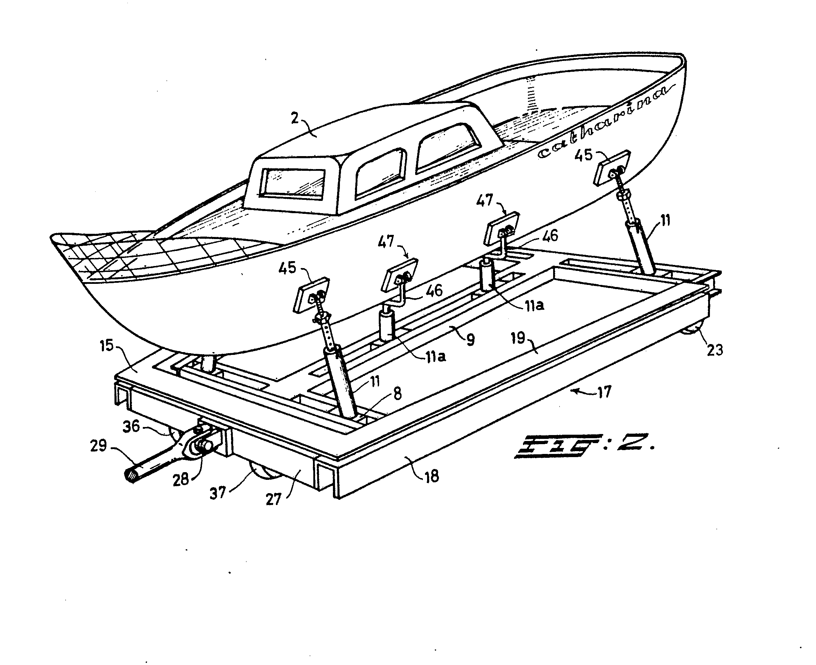

The entire supporting frame is designated in figure 1 by the reference numeral 1a whilst the conveying frame of which the shape is adapted to the supporting frame which is to be used in combination therewith, is designated in said figure by the reference numeral 1b. The supporting frame supports the boat 2. The supporting frame consists of two U-shaped longitudinal beams 3, 4, open to the outside and of two transverse beams 5, 6. The transverse beam 5 is shorter than the transverse beam 6, so that the entirity is somewhat trapezoidal in shape. The upper side of the transverse beams 5 and 6, which are box-shaped, comprises a longitudinal slot 7. Each of the beams encloses one or more guide members 8 being slideable in the longitudinal direction thereof. The transverse beams 5 and 6 are interconnected by means of a central longitudinal beam 9 which is likewise box-shaped and provided with a longitudinal slot 10. Said central longitudinal beam 9 may also accomodate one or more guide members 8, which, though shown in fig. 2, are not shown in fig. 1.

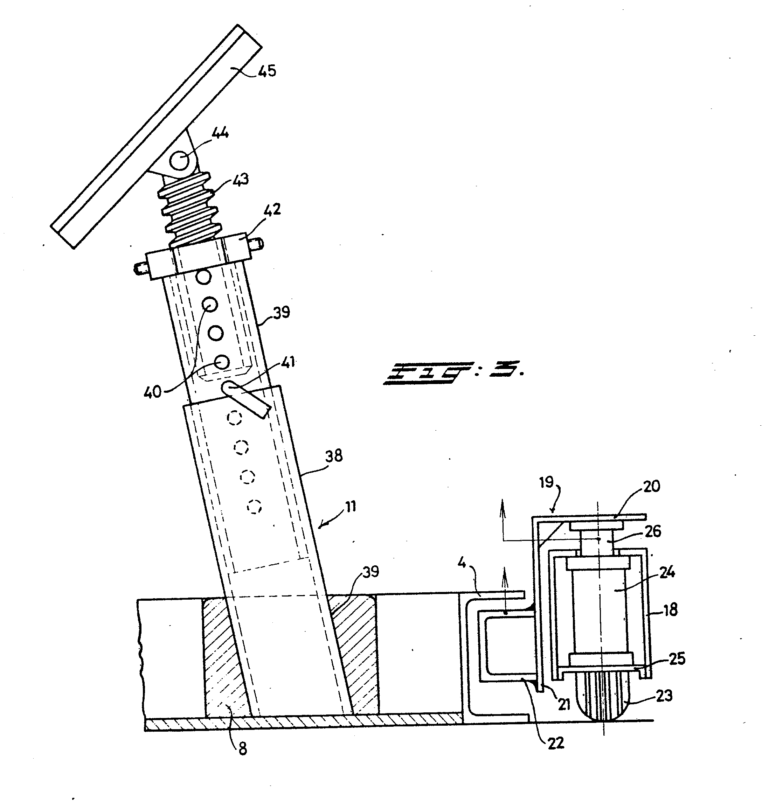

As is shown more in detail in fig. 3 a guide member 8 accomodates an upright 11 (for clarity's sake only partially shown in fig. 1) which will be elucidated further with respect to said fig. 3.

The conveying frame 1b comprises a transverse beam 15 and longitudinal beams 16, 17 slightly diverging from said transverse beam 15. Each longitudinal beam 16, 17 is built up from a U-profile beam 18 open to the underside, and a L-profile beam 19 fitting around said beam 18 which beam 19 is likewise open to the underside and to the outside, said beam 19 being composed of, as seen in cross-section, a horizontal leg 20 and a vertical leg 21 (see fig. 3). The vertical leg 21 supports the U-profile beam 22 fitting into the longitudinal U-shape profile beams 3, 4. The inside of the U-profile beams 18 furthermore accomodates the wheels 23 and a plurality (dependent upon the maximum load of the lifting frame) of hydraulic or pneumatic lifting cylinders 24, which bear on the one hand upon transverse section-s25 located within the U-profile beam 18, said cylinders on the other hand acting upon the lower side of the leg 20 of the L-shape profile beam 19, by means of the piston 26 thereof. Through suitable control valves, known per se (not shown) said lifting cylinders 24 are connected with a source of pressure fluid (likewise not shown).

The U-shape profile beams 18, 19 are interconnected by means of a U-shape profile beam 27 having an open underside to which assembly a towbar 29 is attached via a universal joint 28.

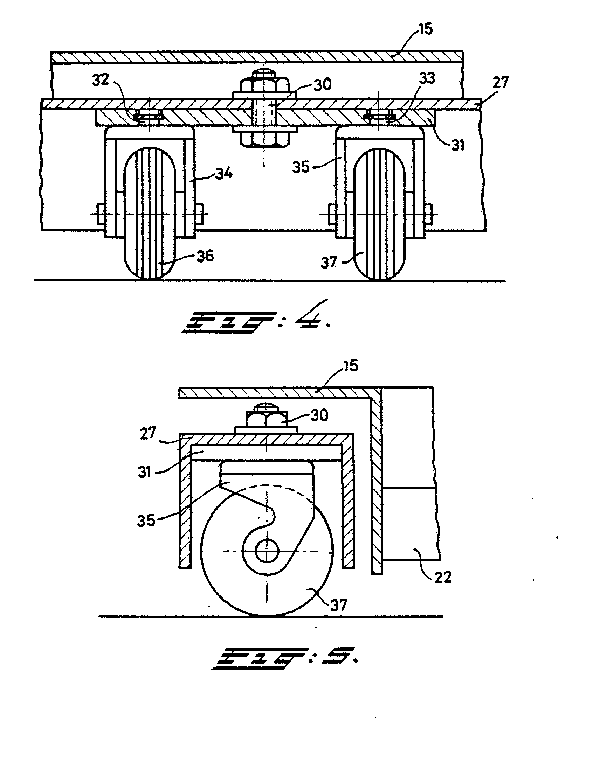

To the flat surface of the profile beam 27 is connected a supporting plate 31 by means of the securing bolt 30 which supporting plate carries, via pivot shafts 32, 33 the wheel frames 34, 35 respectively, with in each frame a wheel 36, 37 respectively. Said wheels are of the known self-castoring "piano wheel" type. Figures 4 and 5 show the respective wheel frame on an enlarged scale.

Each upright 11 is made up from a lower outer tube 38, fitting into a sloping bore 39 in a guide member 8, and an inner tube 39 fitting within said outer tube 38 and being provided with a row of adjusting apertures 40 through which a locking pin 41 passes, while the upper end of tube 39 comprises a rotatable ring 42 having trapezoidal inner screwthread. Therein is screwed a screw rod 43 of which the end supports the supporting head 45 via a journal 44.

The load being exerted upon a supporting head 45 can be resolved into a horizontal and a vertical component; the horizontal component will cause the guide member 8 to cant slightly in the beam which encloses it, so that said guide member is effectively blocked against any displacement in the longitudinal direction of the beam.

Fig. 2 shows how the central longitudinal beam 9 encloses two uprights 11a having a structure somewhat different from the one described above; each of said uprights ends into a U-shape supporting piece 46 comprising two supporting heads 47 bearing against the side of the hull. The use of said supporting heads 47 ensures an optimum support of the respective boat.

After having obtained an approximate correct level of the supports by means of the adjusting apertures 40 and the locking pin 41, the boat is placed upon the cradle, and by rotating the rotatable screwthread rings 42 the supports with the supporting heads 45 are adjusted in such a manner that the boat is optimally supported. Subsequently the conveying frame 1b is wheeled around the supporting frame 1a with the boat on it and, when said conveying frame 1b entirely embraces the supporting frame 1a the lifting cylinders are energized, thus causing the beams 19 and 15 to ascend so that the upper edges of the profile beams 22 will press against the underside of the profile beams 3, 4, so that the entire supporting frame together with the uprights supporting the boat, will be lifted.

By means of a suitable tractor or by manpower, the assembly of conveying frame and supporting frame is conveyed towards its location, whereupon the lifting cylinders 24 are retracted and the supporting frame comes to rest upon the bottom. The conveying frame can then be wheeled away and be used for conveying another supporting frame.

Claims:

1. A conveyable boat cradle comprising a polygonal supporting frame having components for the support of a boat hull, characterized by a conveying frame to be located around said supporting frame said conveying frame comprising roller members and lifting means acting in a vertical direction between said conveying frame on the one hand and said supporting frame on the other hand.

2. A conveyable boat cradle according to claim 1, characterized in that, the supporting frame has a substantial trapezoidal shape, while the conveying frame has a substantial U-shape and comprises slightly diverging longitudinal legs.

3. A conveyable boat cradle according to claim 2, characterized in that, the conveying frame comprises at least along two sides facing each other,a L-shape profile beam open to the underside and outside which profile beam is provided with coupling members interacting with the supporting frame, with within said L-profile beam a U-shape profile beam, open to the underside and accomodating rollers, the lifting members being supported in the U-profile beam and acting upon a transverse leg of the L-beam thereabove.

4. A conveyable boat cradle according to claim 3, characterized in that, the two longitudinal sides of the supporting frame comprise a supporting surface which projects towards the outside and which cooperates with a lifting surface being accomodated below said supporting surface on the inner side of the L-profile beam and extending towards the centre of the conveying frame.

5. A conveyable boat cradle according to claims 1-4, characterized in that, the lifting members are pneumatically or hydraulically operating lifting/cylinders which are located perpendicular to the plane of the conveying frame.

6. A conveyable boat cradle according to claim 4, characterized in that, the supporting surface is constituted by a leg of a longitudinal U-shape profile beam open to the outside, the lifting surface being formed by the upper surface of a profile beam section being provided on the inside of the conveying frame.

7. A conveyable boat cradle according to claims 1-6, characterized in that, the transverse beam of the conveying frame carries at least one wheel being rotatable about a vertical axle.

8.  A conveyable boat cradle according to claims 1-7, characterized in that, the uprights of the supporting frame are built up from telescoping tube sections, the lower end of the outermost section being accomodated in a guide member which is slideably enclosed in a frame beam being provided with a longitudinal slot.

9.  A conveyable boat cradle according to claim 8, characterized in that, the two transverse beams of the supporting frame are interconnected by means of a longitudinal central beam being provided with a longitudinal slot.

0063651

FIG.1.

0063651

FIG: 3.

0063651

FIG:4.

FIG:5.

European Patent Office

**EUROPEAN SEARCH REPORT**

0063651

Application number

EP 81 20 0454.7

## DOCUMENTS CONSIDERED TO·BE RELEVANT

| Category | Citation of document with indication, where appropriate, of relevant passages | Relevant to claim |
|---|---|---|
| | US - A - 3 018 907 (GAIL) <br> * fig. 1 to 10 * <br> -- | 1 |
| | US - A - 2 487 508 (ANDERSON) <br> * columns 1, 2; fig. 1, 2 * <br> -- | 1,3, <br> 5,7 |
| | CH - A5 - 578 994 (INTURAS WERBE AG) <br> * fig. 1 to 4 * <br> -- | 1,4, <br> 6,7 |
| A | US - A - 3 682 337 (MAY et al.) <br> -- | |
| D | NL - A - 7 903 417 (VAN DEN BROEK) <br> & GB - A - 2 047 632 <br> ---- | |

**CLASSIFICATION OF THE APPLICATION (Int. Cl.³)**

B 63 C   13/00

B 66 F   9/065

B 60 P   3/10

**TECHNICAL FIELDS SEARCHED (Int. Cl.³)**

B 60 P   3/00

B 63 C   13/00

B 66 F   9/00

**CATEGORY OF CITED DOCUMENTS**

X: particularly relevant

A: technological background

O: non-written disclosure  .

P: intermediate document

T: theory or principle underlying the invention

E: conflicting application

D: document cited in the application

L: citation for other reasons

&: member of the same patent family, corresponding document

| | The present search report has been drawn up for all claims | |
|---|---|---|

| Place of search | Date of completion of the search | Examiner |
|---|---|---|
| Berlin | 02-12-1981 | LUDWIG |

EPO Form 1503.1   06.78